# EUROPÄISCHE PATENTSCHRIFT

(11) **EP 3 099 930 B1**
(45) Veröffentlichungstag und Bekanntmachung des Hinweises auf die Patenterteilung: **22.04.2020**
(21) Anmeldenummer: 15703489.3
(22) Anmeldetag: 26.01.2015
(51) Int. Cl.: F03D 13/20

(54) **WINDENERGIEANLAGE**
WIND TURBINE
ÉOLIENNE

(30) Priorität: 28.01.2014 DE 102014201507
(43) Veröffentlichungstag der Anmeldung: 07.12.2016
(73) Patentinhaber: Wobben Properties GmbH, 26607 Aurich (DE)
(72) Erfinder: ALTMIKUS, Andree, 26605 Aurich (DE); HOFFMANN, Alexander, 26721 Emden (DE)
(74) Vertreter: Eisenführ Speiser
(86) Internationale Anmeldenummer: PCT/EP2015/051472
(87) Internationale Veröffentlichungsnummer: WO 2015/113932

(56) Entgegenhaltungen:
- EP-A1- 1 533 521
- DE-A1- 3 842 026
- JP-A- 2010 150 985
- US-A1- 2009 211 173

## Beschreibung

Die Erfindung betrifft eine Windenergieanlage gemäß dem unabhängigen Anspruch 1.

Windenergieanlagen oder Windkraftanlagen umfassen einen Turm und eine Gondel, die am oberen Ende des Turmes angebracht ist. Darüber hinaus ist an der Gondel ein Rotor gebildet, der sich im Betrieb der Windenergieanlage dreht und einen Generator im Inneren der Gondel antreibt. Aufgrund ihrer Konstruktion, in Form eines langen Hebels (Turm) mit einer schweren Masse (Gondel plus Generator) am Ende des Hebels, sind Windenergieanlagen anfällig für Schwingungen. Auslöser oder Anregung für eine Schwingung des Turmes können beispielsweise externe Kräfte sein, beispielsweise Wind, der an Gondel und Turm angreift. Daneben können aber auch interne Kräfte, beispielsweise eine Schwingung oder Vibration des Generators im Inneren der Gondel, den Turm zu Schwingungen anregen. Wenn die Anregungsfrequenz dabei eine Resonanzfrequenz des Turmes trifft, kann es zu einem "Aufschaukeln" der Schwingungen bis hin zur sogenannten Resonanzkatastrophe kommen. Schwingungen führen in jedem Fall zu einer erhöhten Belastung des Materials, so dass bereits nach kurzer Zeit Ermüdungserscheinungen, insbesondere (Mikro-)Risse, im Material des Turms auftreten können.

Wünschenswert wäre es deshalb, eine Vorrichtung und/oder eine Windenergieanlage bereitzustellen, bei welcher die Schwingungen des Turms der Windenergieanlage unterdrückt und/oder gedämpft werden. Insbesondere wäre es wünschenswert, eine Vorrichtung und/oder Windenergieanlage bereitzustellen, mit welcher die Schwingungen, die vom Generator ausgelöst werden, gedämpft werden.

Aus dem Stand der Technik sind hierfür verschiedene Lösungen bekannt.

So ist beispielsweise aus der Patentschrift DE 10 2005 018 749 B4 eine Vorrichtung zur Lagerung eines Generators in einer Windenergieanlage mit mehreren Dämpfungselementen bekannt. Hierbei sind die Generatorfüße mit einer Platte verbunden, die mehrere Dämpfungselemente aufweist, so dass die vom Generator erzeugten Schwingungen nicht auf die Gondel und/oder den Turm der Windenergieanlage übertragen werden sollen.

Die Patentanmeldung DE 10 2010 009 863 A1 schlägt daneben eine Einrichtung zur Reduzierung der Lasten im Antriebsstrang einer Windenergieanlage vor. Hierbei werde mittels eines Sensors Schwingungen im Antriebsstrang des Generators erfasst und dann mittels einer aktiven Steuerung, insbesondere mittels aktiv ansteuerbarer Dämpfungsmittel, kompensiert.

Auch aus dem Dokument DE 10 2007 019 907 B4 ist eine Vorrichtung zur aktiven Dämpfung eines Antriebsstranges in einer Windenergieanlage bekannt.

Das Dokument EP 1 533 521 A1 offenbart eine Windenergieanlage mit einer Versteifungsschicht, die auf der Innenseite und/oder Außenseite aufgebracht ist und aus zumindest einer Schicht eines faserverstärkten Kunststoffs besteht.

Das Deutsche Patent- und Markenamt hat für die Prioritätsanmeldung die folgenden Dokumente recherchiert: US 2011/0138704 A1 und WO 2013/010664 A1.

Die aus dem Stand der Technik bekannten Lösungen sind konstruktiv aufwendig und mit einem hohen Kosten-und Wartungsaufwand verbunden.

An dieser Stelle setzt die Erfindung an, deren Aufgabe es ist, eine verbesserte Vorrichtung und/oder Windenergieanlage bereitzustellen, mit der eine verbesserte Dämpfung, insbesondere eine kosten-und wartungsarme Dämpfung, der Schwingungen eines Turmes der Windenergieanlage bereitgestellt werden soll. Insbesondere ist es Aufgabe der Erfindung, eine Vorrichtung und/oder Windenergieanlage bereitzustellen, mit welcher, die durch den Generator erzeugten Schwingungen der Windenergieanlage gedämpft werden. Zumindest aber soll eine alternative Lösung zu den aus dem Stand der Technik bekannten Lösungen vorgeschlagen werden.

Diese Aufgabe wird erfindungsgemäß durch die Windenergieanlage mit einer Faserwicklung nach dem unabhängigen Anspruch 1 gelöst.

Die Erfindung umfasst den Gedanken einer Windenergieanlage mit einem Turm und einer Gondel, wobei an der Gondel ein Rotor mit mindestens einem Rotorblatt angeordnet ist und der Rotor in Betrieb der Windenergieanlage eine Drehbewegung ausführt und die Drehbewegung über eine Welle einen Generator innerhalb der Gondel antreibt, wobei an dem Turm der Windenergieanlage eine Faserwicklung angeordnet ist, die eine vertikale Turmachse des Turms der Windenergieanlage umwickelt und die konfiguriert ist eine Schwingung des Turmes zu dämpfen. Im Folgenden wird das Konzept der Erfindung beispielhaft -ohne die Erfindung dabei einzuschränken -beschrieben. Die Erfindung hat erkannt, das Schwingungen eines Turmes einer Windenergieanlage mit einer Faserwicklung, die um dem Turm der Windenergieanlagegewickelt ist unterdrückt und gedämpft werden können. Hierbei wird die Schwingungsenergie des Turmes der Windenergieanlage von der Faserwicklung aufgenommen wird und beispielsweise in Wärmeenergie gewandelt. Diese und andere bevorzugte Ausgestaltungsformen der Erfindung sind Gegen-stand der Unteransprüche und präzisieren die erfindungsgemäße Windenergieanlage. Insbesondere sind bevorzugte Weiterbildungen Gegenstand der Unteransprüche und geben im Einzelnen vorteilhafte Möglichkeiten an, wie die oben erläuterte Windenergieanlage im Rahmen der Aufgabenstellung sowie hinsichtlich weiterer Vorteile zu realisieren bzw. auszugestalten ist.

Die Erfindung sieht vor, dass der Generator ein Synchrongenerator ist. Die Erfindung berücksichtigt den Gedanken, dass Windenergieanlagen entweder mit einen Synchron-oder einen Asynchrongenerator gebildet sind, wobei die Netzanbindung, insbesondere die Stromeinspeisung, der Windenergieanlage dann entweder direkt oder indirekt erfolgt. Direkte Netzanbindung(bei Synchrongeneratoren)bedeutet, dass der Generatorstrom direkt in das Stromnetz eingespeist wird, wohingegen indirekte Netzanbindung(bei Asynchrongeneratoren)bedeutet, dass der Generatorstrom erst noch an den Netzstrom, insbesondere an die Netzfrequenz, angepasst werden muss. Die vorliegende Erfindung betrifft Windenergieanlagen, die einen Synchrongenerator umfassen. Synchrongeneratoren sind mit einem Generator-Rotor und einem Generator-Stator gebildet, wobei der Generator-Rotor ein Magnetfeld aufweist, das entweder durch Permanentmagneten oder durch Elektromagneten erzeugt wird. Der Generator-Stator umfasst eine Vielzahl von Spulen, insbesondere Statorwicklungen, die konfiguriert sind, derart, dass bei einer Drehung des Generator-Rotors im Generator-Stator eine Wechselspannung oder Generatorstromerzeugt wird, deren Höhe und Frequenz von der Drehzahl des Generator-Rotors abhängig ist.

Aufgrund der Permanentmagnete im Generator-Rotor und der gegenüberliegend, induzierten Magnete der Generator-Statorpole ergibt sich für den Synchrongenerator ein Rastmoment, das auch "cogging" genannt wird. Das Rastmoment kann auch als eine Art "magnetische Reibung" oder "magnetisches Reibungsmoment" interpretiert werden. Aufgrund des während der Drehung periodisch auftretenden Rastmomentes oder der periodisch auftretenden magnetischen Reibung kann der Generator mit einer bestimmten Rastfrequenz in Schwingung versetzt werden. Die Schwingung des Generators kann sich über die Aufhängung des Generators, insbesondere über die Generatorfüße, auf die Windenergieanlage, insbesondere auf den Turm der Windenergieanlage, fortpflanzen oder übertragen, so dass auch der Turm zu einer Schwingung angeregt wird.

Die Rastfrequenz des Generators ist dabei abhängig von der Anzahl der magnetischen Pole im Generator, der Frequenz oder Drehzahl der Drehbewegung und dem Durchmesser des Rotors. Typischerweise rotiert ein Rotor mit einem Durchmesser von ca. 80m der Windenergieanlage mit einer Drehzahl von 20 U/min, was einer Frequenz von 1/3 Hz entspricht. Üblicherweise umfasst ein Synchrongenerator ca. 150 bis 180 magnetische Pole und ist somit in der Lage einen Wechselstrom mit einer Frequenz von 50 Hz und damit mit der richtigen Netzfrequenz zu erzeugen. Hieraus ergibt sich jedoch auch eine Anregungsfrequenz (Rastfrequenz) für eine mechanische Schwingung des Generators und des Turmes der Windenergieanlage von ca. 50 Hz.

Diese Schwingungen sollen mit der Faserwicklung, die am Turm der Windenergie-anlage angeordnet ist, gedämpft werden.

Auch sieht die Erfindung vor, dass die Faserwicklung am oberen Ende in Richtung der vertikalen Turmachse des Turmes angeordnet ist, insbesondere an einem obersten Turmsegment. Hierbei kann es insbesondere vorgesehen sein, dass der Turm mit mehreren Turmsegmenten gebildet ist. Bevorzugt wird die Faserwicklung in der Nähe zum Generator angeordnet, das heißt bevorzugt am oberen Ende des Turmes, insbesondere am obersten Ende des obersten Turmsegmentes. In einer anderen Ausgestaltungsform kann es aber auch vorgesehen sein, das mehrere Faserwicklungen gebildet sind, die beispielsweise am ersten, zweiten und/oder jedem weiteren Turmsegment angeordnet sind. Wiederum in einer anderen Ausgestaltungsform kann es sein, dass eine zusätzliche Faserwicklung an der Gondel der Windenergieanlage angeordnet ist.

Bei einer zweckmäßigen Ausgestaltung kann vorgesehen sein, dass die Faserwicklung in radialer Richtung zur Turmachse eine bestimmte Dicke aufweist, wobei die Abmessung der Dicke so gewählt ist, dass die Schwingung des Turmes maximal gedämpft wird, wobei die Schwingung durch eine Rastfrequenz des Generators erzeugt wird.

Bevorzugt sieht eine Ausgestaltung vor, dass die Dicke der Faserwicklung in einem Bereich von 50 mm bis 100 mm liegt.

Eine bevorzugte Weiterbildung sieht vor, dass die Faserwicklung in axialer Richtung der Turmachse eine Breite b aufweist, wobei die Abmessung der Breite b so gewählt ist, dass die Schwingung des Turmes maximal gedämpft wird, wobei die Schwingung des Turmes durch die Rastfrequenz des Generators erzeugt wird.

Bei der Erfindung ist es vorgesehen, dass die Faserwicklung in einer Aussparung in einer Oberfläche des Turmes, insbesondere des obersten Turmsegmentes, angeordnet ist, wobei die Oberfläche der Faserwicklung in radialer Richtung zur Turmachse bündig mit der Oberfläche des Turmes ab-schließt. Hierbei ist es in besonderer Weise vorgesehen, dass die Faserwicklung in den Turm, insbesondere das oberste Turmsegment, integriert ist, derart, dass die Faserwicklung den optischen Eindruck des Turmes von außen nicht verändert.

Die Erfindung sieht auch vor, dass die Faserwicklung in einer Aussparung auf einer Innenseite des Turmes, insbesondere des obersten Turmsegmentes, angeordnet sein kann, und die Oberfläche der Faserwicklung in radialer Richtung zur Turmachse bündig mit der Innenseite des Turmes abschließt.

Eine Weiterbildung kann vorsehen, dass das Turmsegment als ein Stahlelement gebildet ist.

Bevorzugt sieht eine Ausgestaltung vor, dass die Faserwicklung in Form eines Faserverbundwerkstoffes mit einer Matrix und einer verstärkten Faser gebildet ist.

Eine bevorzugte Ausgestaltungsform betrifft eine Windenergieanlage mit einer Faserwicklung, bei der die Matrix des Faserverbundwerkstoffe sein Harz aus einem der nachfolgenden Materialien ausgewählt ist: Duomere, Duroplaste, Kunst-harze, Elastomere oder und/oder elastomere Thermoplaste und/oder die Faserwicklung mit mehreren Fasermatten gebildet ist. In einer bevorzugten Ausgestaltung kann es vorgesehen sein, dass Sandwich-Kernwerkstoffe verwendet werden.

Eine weitere vorteilhafte Ausgestaltungsform betrifft eine Windenergieanlagemit einer Faserwicklung, bei der die Faserwicklung mit verstärkten Fasern aus zumindest einem der folgenden Materialien gebildet ist: Glasfasern, Kohlestofffasern, Keramikfasern, Aramidfasern, Borfasern, Basaltfasern, Stahlfasern, Nylonfasern und/oder Naturfasern, die diagonal, parallel und/oder senkrecht zur Turmachse orientiert sind.

Ausführungsbeispiele der Erfindung werden nachfolgend anhand der Figuren im Vergleich zum Stand der Technik, welcher zum Teil ebenfalls dargestellt ist, beschrieben. Diese sollen die Ausführungsbeispiele nicht notwendigerweise maßstäblich darstellen, vielmehr sind die Figuren, wo zur Erläuterung dienlich, in schematisierter und/oder leicht verzerrter Form ausgeführt. Im Hinblick auf Ergänzungen der aus den Figuren unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Figuren und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Identische oder ähnliche Teile oder Teile identischer oder ähnlicher Funktion sind, dort wo sinnvoll der Einfachheit halber mit einem gleichen Bezugszeichen versehen.

Weitere Vorteile, Merkmale und Einzelheiten der Erfindung ergeben sich aus der nachfolgenden Beschreibung der bevorzugten Ausführungsbeispiele sowie anhand der Figuren.

Im Einzelnen zeigen:
- Fig. 1: eine mögliche Ausgestaltungsform einer Windenergieanlage mit einer Faserwicklung;
- Fig. 2: eine weitere Ausgestaltungsform für eine Windenergieanlage mit einer Faserwicklung;
- Fig. 3: ein bevorzugtes Ausführungsbeispiele für das Innere einer Gondel einer Windenergieanlage; und
- Fig. 4A und 4B: zwei(Teil-)Ausschnitte einer weiteren Ausgestaltungsform für eine Windenergieanlage mit einer Faserwicklung.

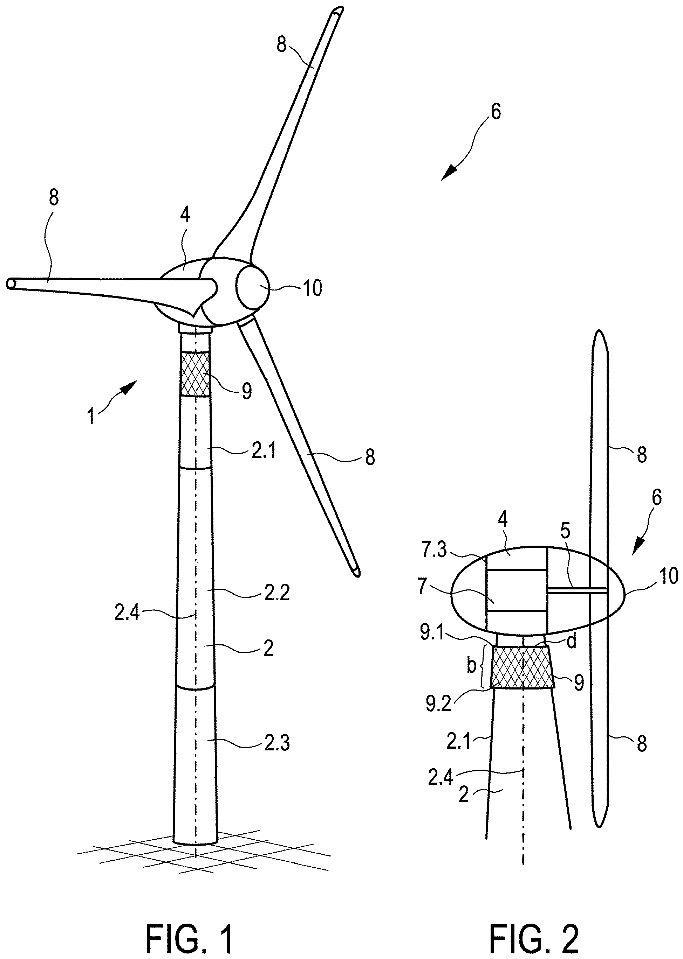

Fig. 1 zeigt eine Windenergieanlage 1 mit einem Turm 2 und einer Gondel 4. Der Turm ist beispielhaftmit drei Turmsegmenten, einem ersten Turmsegment 2.1, einem zweiten Turmsegment 2.2 und einem dritten Turmsegment 2.3, gebildet, die in vertikaler Richtung der Turmachse 2.4 übereinander angeordnet und verbunden sind und den Turm 2 der Windenergieanlage 1 bilden. An der Gondel 4 ist ein Rotor 6 mit drei Rotorblättern 8 an einem Spinner 10 angeordnet. Der Rotor 6 wird im Betrieb der Windenergieanlage 1 durch den Wind in eine Drehbewegung versetzt und treibt einen Generator (nicht dargestellt) im Inneren der Gondel 4 an. Mit Hilfe des Generators wird die mechanische Energie der Drehbewegung in elektrische Energie gewandelt, die dann in das Stromnetz eingespeist werden kann.

Weiterhin umfasst die Windenergieanlage 1 eine Faserwicklung 9, die am Turm 2 der Windenergieanlage 1, insbesondere an einem obersten Turmsegment 2.1, angeordnet ist. Hierbei umwickelt die Faserwicklung 9 eine Außenfläche des Turmes parallel zu der vertikalen Turmachse 2.2 des Turmes 2 der Windenergie-anlage1. Die Faserwicklung 9 ist konfiguriert, eine Schwingung oder Vibration des Turmes 2 zu unterdrücken und/oder zu dämpfen.

Fig. 2 zeigt eine weitere Ausgestaltungsform für eine Windenergieanlage mit einer Faserwicklung 9. Die Windenergieanlage 1 umfasst wiederum einen Turm 2, insbesondere ein Turmsegment 2.1. In der Gondel 4, die oberhalb des Turmes, insbesondere des Turmsegmentes 2.1 angeordnet ist, ist ein Generator (schematisch dargestellt) angeordnet, der im Betrieb der Windenergieanlage 1 eine Drehbewegung ausführt. Hierbei wird die Drehbewegung des Rotors 6 über einen Achszapfen, insbesondere eine Welle 5, auf den Generator 7 übertragen.

Bei dem Generator handelt es sich beispielsweise um einen Synchrongenerator, der konfiguriert ist, einen Generatorstrom direkt in das Stromnetz einzuspeisen, ohne dass eine Anpassung an den Netzstrom, insbesondere an die Netzfrequenz (von 50 Hz), notwendig ist.

Im Betrieb kann es aufgrund eines periodisch auftretenden Rastmomentes zu einer periodischen Schwingung des Synchrongenerators mit einer Rastfrequenz kommen. Die Schwingung des Generators kann sich dann über die Aufhängung 7.3 des Generators, insbesondere über die Generatorfüße, auf die Windenergieanlage 1, insbesondere auf den Turm 2 der Windenergieanlage 1, fortpflanzen beziehungsweise übertragen, sodass der Turm 2 zu einer Schwingung angeregt wird. Diese Schwingungen werden mit einer Faserwicklung 9, die am Turm 2 der Windenergieanlage 1 angeordnet ist, unterdrück und/oder gedämpft, wobei die Faserwicklung 9 eine Oberfläche des Turmes 2 radial zur Turmachse umwickelt.

Die Faserwicklung 9 ist als ein Faserverbundwerkstoff mit einer Matrix 9.1, beispielsweise einem Harz, beispielsweise Duromer, Duroplast, Kunstharz, Elastomer und/oder Thermoplast und mit einer in die Matrix 9.1 eingebetteten verstärkten Faser 9.2 gebildet. Bevorzugt wird die Faserwicklung mit mehreren Fasermatten gebildet, wobei die Fasern beispielsweise Glasfasern, Kohlefasern, Keramikfasern, Aramidfasern, Bohrfasern, Basaltfasern, Stahlfasern, Nylonfasern und/oder Natur-fasern seien können, die diagonal, parallel und/oder senkrecht zur Turmachse 2.4 orientiert sein können.

Weiter weist die Faserwicklung 9 in radialer Richtung zur Turmachse 2.4 eine Dicke d und in axialer Richtung der Turmachse2.4eine Breite b auf.

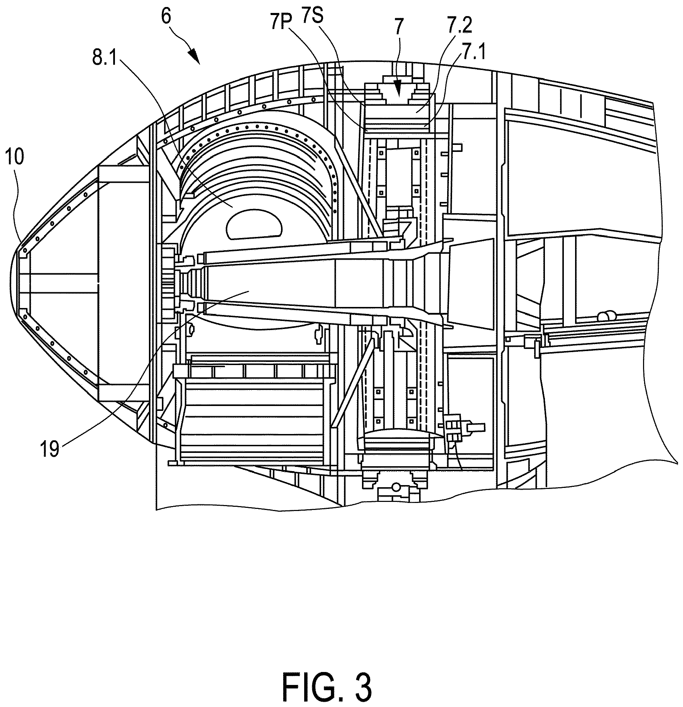

Fig. 3 zeigt eine detaillierte Darstellung für das Innere der Gondel 4 einer Windenergieanlage. Insbesondere zeigt Fig. 3 eines Rotor 6 und einen Generator 7. Die Rotorblätter (nicht dargestellt) sind über die Rotorblattnabe 8.1 genauso wie der Generator 7 über einen Generator-Rotor 7.1 auf einem Achszapfen 19, insbesondere einer gemeinsamen Welle, drehbar gelagert. Die Drehbewegung des Rotors 6 der Windenergieanlage wird über den Achszapfen 19 in eine Drehbewegung des Generator-Rotors 7.1 umgesetzt.

Bei dem Generator handelt es sich beispielsweise um einen Synchrongenerator, der konfiguriert ist, einen Generatorstrom direkt in das Stromnetz einzuspeisen, ohne dass eine Anpassung an den Netzstrom, insbesondere an die Netzfrequenz (von 50 Hz), notwendig ist. Hierfür dreht sich ein Generator-Rotor 7.1 innerhalb des Generator-Stators 7.2 und generiert dabei einen elektrischen Strom gemäß der konstruktiven Ausgestaltung des Generators 7.

Synchrongeneratoren sind typischerweise mit einem Generator-Rotor 7.1 und einem Generator-Stator 7.2 gebildet, wobei der Generator-Rotor 7.1 ein Magnetfeld aus umfänglich angeordnete magnetische Pole 7P aufweist, welches entweder durch Permanentmagnete oder durch Elektromagnete erzeugt wird. Der Generator-Stator umfasst eine Vielzahl von Spulen, insbesondere Statorwicklungen 7S, die konfiguriert sind, dass bei einer Drehung des Generator-Rotors 7.1 eine Wechselspannung im Generator-Stator 7.2, insbesondere in den Statorwicklungen induziert wird, deren höhere Höhe und Frequenz von der Drehzahl des Generatorrotors abhängig ist.

Aufgrund der magnetischen Pole im Generator-Rotor7.1und der gegenüberliegenden induzierten magnetischen Pole im Generator-Stator 7.2, die je nach Ausrichtung des Generator-Rotors 7.1mal eine ein attraktive mal eine abstoßende Wirkung auf einander haben, ergibt sich für einen Synchrongenerator ein periodisches Rastmoment, das auch "cogging torque" genannt wird. Das Rastmoment kann auch als ein magnetisches Reibungsmoment interpretiert werden. Aufgrund des während der Drehung periodisch auftretenden Rastmomentes kann der Synchrongenerator mit einer Rastfrequenz zu einer Schwingung angeregt werden. Die Schwingung des Generators kann sich dann über die Aufhängung des Generators auf die Windenergieanlage, insbesondere auf den Turm der Windenergieanlage, fortpflanzen beziehungsweise übertragen, so dass der Turm zu einer Schwingung angeregt wird. Die Rastfrequenz ist dabei abhängig von der Anzahl der magnetischen Pole und der Drehzahl oder Frequenz der Drehbewegung.

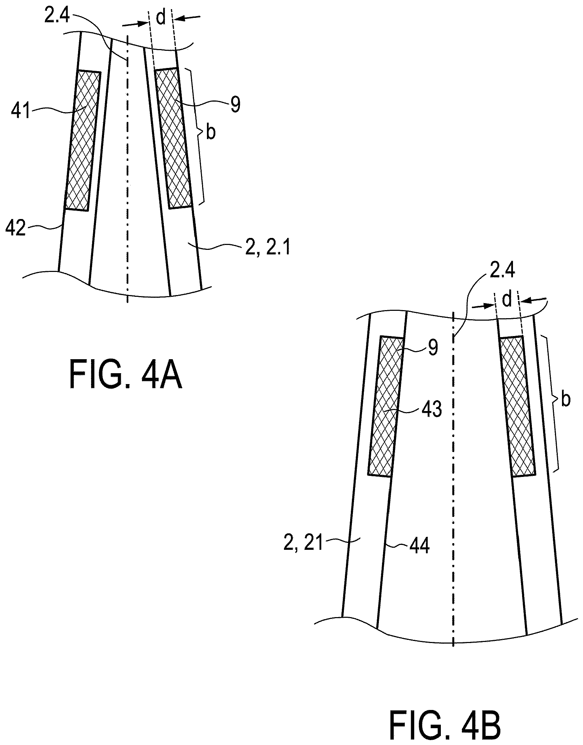

Die Fig. 4A und 4B zeigen zwei(Teil-)Ausschnitte einer weiteren Ausgestaltungsform für eine Windenergieanlage mit einer Faserwicklung9, insbesondere einen Ausschnitt eines Turmes der Windenergieanlage. Die Faserwicklung 9weistin radialer Richtung zur Turmachse 2.4 eine Dicke d und in axialer Richtung der Turmachse2.4eine Breite b auf.

Fig. 4A zeigt eine Faserwicklung 9, die in einer Aussparung 41 in einer Oberfläche 42 des Turmes 2, insbesondere des obersten Turmsegmentes 2.1, angeordnet ist, wobei die Oberfläche der Faserwicklung 9 in radialer Richtung zur Turmachse 2.4 bündig mit der Oberfläche 42 des Turmes 2 abschließt. Hierbei ist es in besonderer Weise vorgesehen, dass die Faserwicklung 9 in dem Turm, insbesondere in das oberste Turmsegment 2.1, integriert ist, derart, dass die Faserwicklung den optischen Eindruck des Trumes von Außen nicht verändert.

Die Fig. 4B zeigt eine weitere Ausgestaltung für eine Faserwicklung 9, die in einer Aussparung 43 auf einer Innenseite 44 des Turmes 1, insbesondere des obersten Turmsegmentes 2.1, angeordnet ist, wobei die Oberfläche der Faserwicklung 9 in radialer Richtung zur Turmachse 2.4 bündig mit der Innenseite 44 des Turmes 2 abschließt. Diese Ausgestaltungsform kann alternativ und/oder ergänzend zu einer Faserwicklung auf der Oberfläche der Außenseite des Turmes vorgesehen sein.

## Patentansprüche

1. Windenergieanlage (1) mit einem Turm (2) und einer Gondel (4), wobei an der Gondel (4) ein Rotor (6) mit mindestens einem Rotorblatt (8) angeordnet ist und der Rotor (6) in Betrieb der Windenergieanlage (1) eine Drehbewegung ausführt und die Drehbewegung einen Generator (7)innerhalb der Gondel (4) antreibt, wobei an dem Turm (2) der Windenergieanlage (1) eine Faserwicklung (9) angeordnet ist, die eine vertikale Turmachse (2.4) des Turms (2) der Windenergieanlage (1) umwickelt und die konfiguriert ist eine Schwingung des Turmes zu dämpfen,
**dadurch gekennzeichnet, dass**
- der Generator (7) ein Synchrongenerator ist,
- die Faserwicklung (9) am oberen Ende in Richtung der vertikalen Turmachse (2.4) des Turmes (2) angeordnet ist, insbesondere an einem obersten Turmsegment (2.1),
- die Faserwicklung (9) in einer Aussparung (41) in einer Oberfläche (42) des Turms (2), nämlich des obersten Turmsegmentes (2,1), angeordnet ist; wobei eine Oberfläche der Faserwicklung (9) in radialer Richtung zur Turmachse (2.4) bündig mit der Oberfläche (42) des Turms (2) abschließt, und/oder
- die Faserwicklung (9) in einer Aussparung (43) auf einer Innenseite (44) des Turms (2), nämlich des obersten Turmsegmentes (2.1), angeordnet ist; und die Oberfläche der Faserwicklung (9) in radialer Richtung zur Turmachse (2.4) bündig mit der Innenseite (44) des Turms (2) abschließt.

2. Windenergieanlage (1) nach Anspruch 1, **dadurch gekennzeichnet, dass** die Faserwicklung (9) in radialer Richtung zur Turmachse (2.4) eine Dicke (d) aufweist, wobei eine Abmessung der Dicke (d) so gewählt ist, dass die Schwingung des Turmes(d) gedämpft wird, wobei die Schwingung durch den Generator (7) erzeugt wird.

3. Windenergieanlage (1) nach Anspruch 1 oder 2, **dadurch gekennzeichnet, dass** die Faserwicklung (9) in axialer Richtung zur Turmachse (2.4) eine Breite (b) aufweist, wobei eine Abmessung der Breite (b) so gewählt ist, dass die Schwingung des Turmes gedämpft wird, wobei die Schwingung durch den Generator (7) erzeugt wird.

4. Windenergieanlage (1) nach zumindest einem der vorangehenden Ansprüche, **dadurch gekennzeichnet, dass** das oberste Turmsegment (2.1) als ein Stahlsegment gebildet ist.

5. Windenergieanlage (1) nach zumindest einem der vorangehenden Ansprüche, **dadurch gekennzeichnet, dass** die Faserwicklung (9) in Form eines Faserverbundwerkstoffes mit einer Matrix (9.1) und einer verstärkten Faser (9.2) gebildet ist.

6. Windenergieanlage (1) nach Anspruch 5 **dadurch gekennzeichnet, dass** die Matrix (9.1), ein Harz, aus einem der nachfolgenden Materialien ausgewählt ist: Duromere, Duroplast, Kunstharze, Elastomere und/oder Elastomere Thermoplaste und/oder die Faserwicklung (9) mit mehreren Fasermatten gebildet ist.

7. Windenergieanlage (1) nach zumindest einem der vorangehenden Ansprüche, **dadurch gekennzeichnet, dass** die Faserwicklung (9) mit verstärkten Fasern (9.2) aus zumindest einem der folgenden Materialien gebildet ist: Glasfasern, Kohlestofffasern, Keramikfasern, Aramidfasern, Bohrfasern, Basaltfasern, Stahlfasern, Nylonfasern und/oder Naturfasern, die diagonal, parallel und/oder senkrecht zur Turmachse (2.4) orientiert sind.

## Claims

1. Wind turbine (1) having a tower (2) and a pod (4), wherein a rotor (6) having at least one rotor blade (8) is arranged on the pod (4) and the rotor (6) during operation of the wind turbine (1) carries out a rotation movement and the rotation movement drives a generator (7) inside the pod (4), wherein there is arranged on the tower (2) of the wind turbine (1) a fibre winding (9) which winds around a vertical tower axis (2.4) of the tower (2) of the wind turbine (1) and which is configured to damp an oscillation of the tower, **characterised in that**
- the generator (7) is a synchronous generator,
- the fibre winding (9) is arranged at the upper end in the direction of the vertical tower axis (2.4) of the tower (2), in particular on an uppermost tower segment (2.1),
- the fibre winding (9) is arranged in a recess (41) in a surface (42) of the tower (2), that is to say, the uppermost tower segment (2.1); wherein a surface of the fibre winding (9) terminates in a radial direction towards the tower axis (2.4) in a manner flush with the surface (42) of the tower (2), and/or
- the fibre winding (9) is arranged in a recess (43) at an inner side (44) of the tower (2), that is to say, the uppermost tower segment (2.1); and the surface of the fibre winding (9) terminates in a radial direction towards the tower axis (2.4) in a manner flush with the inner side (44) of the tower (2).

2. Wind turbine (1) according to claim 1, **characterised in that** the fibre winding (9) has in a radial direction towards the tower axis (2.4) a thickness (d), wherein a dimension of the thickness (d) is selected in such a manner that the oscillation of the tower (d) is damped, wherein the oscillation is produced by means of the generator (7).

3. Wind turbine (1) according to claim 1 or 2, **characterised in that** the fibre winding (9) has in the axial direction towards the tower axis (2.4) a width (b), wherein a dimension of the width (b) is selected in such a manner that the oscillation of the tower is damped, wherein the oscillation is produced by means of the generator (7).

4. Wind turbine (1) according to at least one of the preceding claims, **characterised in that** the uppermost tower segment (2.1) is formed as a steel segment.

5. Wind turbine (1) according to at least one of the preceding claims, **characterised in that** the fibre winding (9) is formed in the form of a fibre composite material with a matrix (9.1) and a reinforced fibre (9.2).

6. Wind turbine (1) according to claim 5, **characterised in that** the matrix (9.1), a resin, is selected from one of the following materials: duromers, thermosetting plastics material, synthetic resins, elastomers and/or elastomer thermosetting plastics materials and/or the fibre winding (9) is formed with a plurality of fibre mats.

7. Wind turbine (1) according to at least one of the preceding claims, **characterised in that** the fibre winding (9) is formed with reinforced fibres (9.2) from at least one of the following materials: glass fibres, carbon fibres, ceramic fibres, aramid fibres, boron fibres, basalt fibres, steel fibres, nylon fibres and/or natural fibres which are orientated diagonally, parallel and/or perpendicularly relative to the tower axis (2.4).

## Revendications

1. Eolienne (1) avec une tour (2) et une nacelle (4), dans laquelle un rotor (6) avec au moins une pale de rotor (8) est disposé au niveau de la nacelle (4) et le rotor (6) exécute lors du fonctionnement de l'éolienne (1) un mouvement de rotation et le mouvement de rotation entraîne un générateur (7) à l'intérieur de la nacelle (4), dans laquelle est disposé au niveau de la tour (2) de l'éolienne (1) un enroulement de fibres (9) qui entoure un axe de tour (2.4) vertical de la tour (2) de l'éolienne (1) et qui est configuré pour amortir une vibration de la tour,
**caractérisée en ce que**
- le générateur (7) est un générateur synchrone,
- l'enroulement de fibres (9) est disposé à l'extrémité supérieure en direction de l'axe de tour (2.4) vertical de la tour (2), en particulier au niveau d'un segment de tour (2.1) le plus haut,
- l'enroulement de fibres (9) est disposé dans un évidement (41) dans une surface (42) de la tour (2), en particulier du segment de tour (2,1) le plus haut ; dans laquelle une surface de l'enroulement de fibres (9) se termine dans une direction radiale par rapport à l'axe de tour (2.4) en affleurement avec la surface (42) de la tour (2), et/ou
- l'enroulement de fibres (9) est disposé dans un évidement (43) sur un côté intérieur (44) de la tour (2), en particulier du segment de tour (2.1) le plus haut ; et la surface de l'enroulement de fibres (9) se termine dans une direction radiale par rapport à l'axe de tour (2.4) en affleurement avec le côté intérieur (44) de la tour (2).

2. Eolienne (1) selon la revendication 1, **caractérisée en ce que** l'enroulement de fibres (9) présente dans une direction radiale par rapport à l'axe de tour (2.4) une épaisseur (d), dans laquelle une dimension de l'épaisseur (d) est choisie de telle sorte que la vibration de la tour (d) est amortie, dans laquelle la vibration est générée par le générateur (7).

3. Eolienne (1) selon la revendication 1 ou 2, **caractérisée en ce que** l'enroulement de fibres (9) présente dans une direction axiale par rapport à l'axe de tour (2.4) une largeur (b), dans laquelle une dimension de la largeur (b) est choisie de telle sorte que la vibration de la tour est amortie, dans laquelle la vibration est générée par le générateur (7).

4. Eolienne (1) selon au moins l'une quelconque des revendications précédentes, **caractérisée en ce que** le segment de tour (2.1) le plus haut est formé en tant que segment en acier.

5. Eolienne (1) selon au moins l'une quelconque des revendications précédentes, **caractérisée en ce que** l'enroulement de fibres (9) est formé sous la forme d'un matériau composite à base de fibres avec une matrice (9.1) et une fibre (9.2) renforcée.

6. Eolienne (1) selon la revendication 5, **caractérisée en ce que** la matrice (9.1), une résine, est choisie parmi un des matériaux qui suivent : des duromères, un plastique thermodurcissable, des résines synthétiques, des élastomères et/ou des élastomères thermoplastiques et/ou l'enroulement de fibres (9) est formé avec plusieurs nattes de fibres.

7. Eolienne (1) selon au moins l'une quelconque des revendications précédentes, **caractérisée en ce que** l'enroulement de fibres (9) est formé avec des fibres (9.2) renforcées composées d'au moins un des matériaux suivants : fibres de verre, fibres de carbone, fibres de céramique, fibres d'aramide, fibres de bore, fibres de basalte, fibres d'acier, fibres de Nylon et/ou fibres naturelles, qui sont orientées de manière diagonale, parallèle et/ou perpendiculaire par rapport à l'axe de tour (2.4) .
